## Europäisches Patentamt
## European Patent Office
## Office européen des brevets

(19)

(11) Publication number: **0 045 186**

A1

(12)

# EUROPEAN PATENT APPLICATION

(21) Application number: 81303381.8

(22) Date of filing: 23.07.81

(51) Int. Cl.³: **G 11 B 27/02,** G 11 B 15/62, G 11 B 15/12

(30) Priority: 25.07.80 FR 8016522

(43) Date of publication of application: 03.02.82 Bulletin 82/5

(84) Designated Contracting States: **AT BE CH DE FR GB IT LI LU NL SE**

(71) Applicant: **CAMBRASOUND LIMITED, Freedex House 4/10 North Road, Islington London N7 0HN (GB)**

(72) Inventor: **Juge, Robert Michel, 9 Rue Edouard-Detaille, F-92100 Boulogne-sur-Seine (FR)**

(74) Representative: **Coleman, Stanley et al, MATHYS & SQUIRE 10 Fleet Street, London EC4Y 1AY (GB)**

(54) Method and device for use in tape recording.

(57) A method is provided for making a superimposed recording on a pre-recorded magnetic audio or video tape (48), and also a device for facilitating such recording. The method involves positioning a shielding member (51) between the erase head of a tape recorder and the tape. The shielding member attenuates the erasing field thus allowing additional intelligence to be recorded on the tape over the original recording. The device comprises attachment means, such as arms (15, 17) with dimples (27, 29) for snapping into apertures (30, 32) in the top and bottom walls (34, 36) of a standard audio cassette (13), and also a shielding member (51), for example a flexible strip of material partially or totally impermeable to magnetic field, which extends between the arms and, when the cassette is inserted in a tape recorder, lies between the tape and erase head.

- 1 -

METHOD AND DEVICE FOR USE IN TAPE RECORDING

The present invention relates to a method and a device for use in tape recording. In particular it relates to a method of making a superimposed recording on a pre-recorded magnetic tape and also to a device for facilitating such recording.

In the past, in order to make a superimposed recording over an existing recording without completely erasing the earlier recording, the recording instrument was provided with expensive or complex mixing devices.

The method and device of the present invention have their advantages over prior art methods and devices in that they lack complexity, and the device can be used with conventional tape cassettes and can be manufactured cheaply.

According to one aspect of the present invention there is provided a method of making a superimposed recording on a pre-recorded magnetic tape, comprising locating the tape in a tape recorder for transport thereof past the magnetic heads of the tape recorder, positioning a shielding member, effective to attenuate the erasing field of the erase head, between the tape and the erase head, and actuating the tape recorder to energise the erase and record heads for the recording of additional intelligence on the tape. The tape recorder can be either an audio recorder or a video recorder.

If the shielding member is completely impermeable to the erasing magnetic field, then the recording level of the original recording will be unaffected and a second recording is superimposed when the record head is energised, whilst if there is partial attenuation, the original recording level will be decreased, and on energising the record head a superimposed recording will be made over the reduced volume original.

It is especially convenient in cases where the tape is housed within a cassette for the shielding member to be attached to the cassette which can subsequently be located in the video or audio tape recorder to position the shielding member between the erase head and the tape.

According to a second aspect of the invention there is provided a device for use with a cassette housing magnetic tape and for attenuating the erase field of the erase head of a tape recorder in which the cassette is inserted, characterised in that the device comprises attachment means for securing the device to the cassette and a shielding member which, when the device is so secured and the cassette is inserted in a tape recorder, is located between the tape and the erase head. Again, the cassette may be an audio or a video cassette, and the attenuation of the erasing field may be total, in which case the recording level of the initial recording is unaffected, or partial, in which case the level is reduced to a certain extent.

Suitably, the shielding member comprises a flexible strip adapted so that in use the strip conforms with the contour

- 3 -

of the erase head over an area of contact.

The invention will now be described, by way of example, with reference to the accompanying drawings in which:

Figure 1 is a plan view to an enlarged scale of a first embodiment of a device according to one aspect of the present invention;

Figure 2 is a side view of the same device;

Figure 3 is a perspective view of the device of the preceding Figures with a fragment of a standard audio cassette;

Figure 4 is a plan view to an enlarged scale of a second embodiment of a device according to the invention; and

Figure 5 is a perspective view of the device of Figure 4.

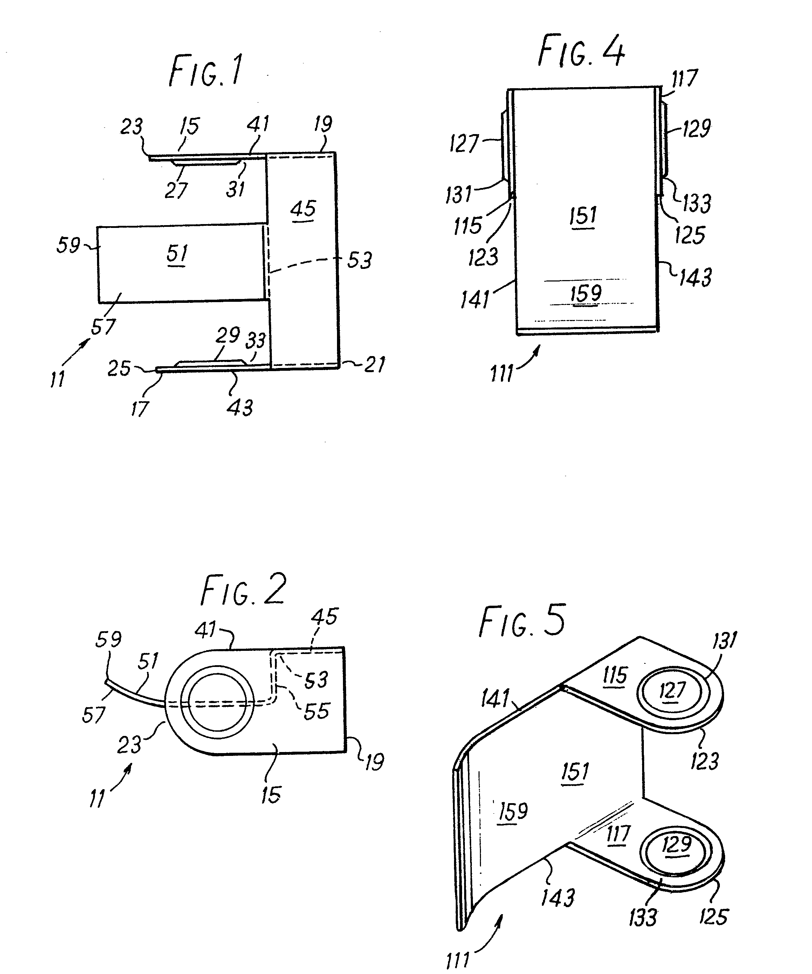

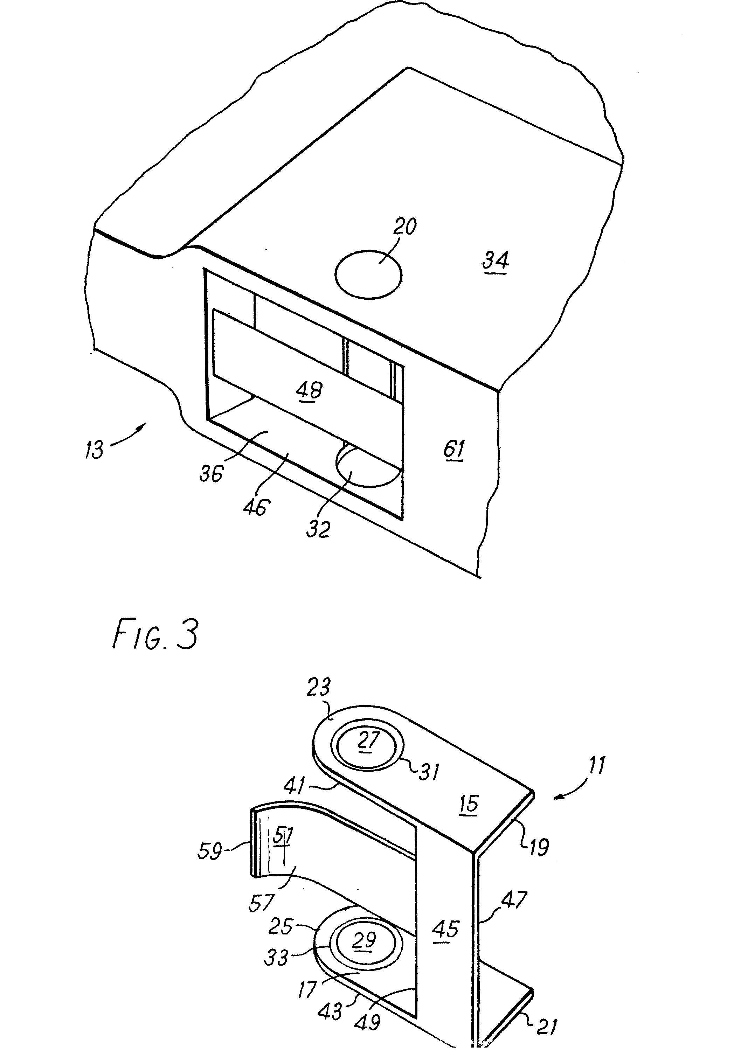

Referring to Figures 1 to 3, there is shown one kind of device generally indicated by the numeral 11 for attachment to a cassette 13 (see Figure 3). The device 11 is in the form of a clip which is generally channel shaped, having a pair of opposed parallel sides 15, 17, connected by a cross member 45. The sides 15, 17 are flat with respective straight edges 19, 21 at one end and respective curved edges 23, 25 at the opposite end. Towards the curved ends of the sides 15, 17 are inwardly projecting circular dimples 27, 29 with chamfered edges 31, 33. The sides 15, 17 with dimples 27, 29 serve as attachment means for the device, the dimples fitting into apertures 30, 32 so that sides 15, 17 engage the outwardly facing surfaces of the top wall 34 and bottom wall 36, respectively, of the cassette housing when the device is fitted onto the cassette. The cross member 45 connects corresponding edges 41, 43 of the two sides 15, 17 of the channel. One edge 47 of the cross member is in the same plane as the edges 19, 21 of the two channel sides, whilst from a central part of the other edge 49 there extends, parallel with the sides 15, 17, a flexible shielding member, in the form of a strip or tongue 51.

From its inner edge 53 connected with the cross member, a first part 55 of strip 51 extends within the channel perpendicular to the cross member 45, and a second part 57 extends laterally from the end of the first part remote from the cross member, between the sides 15, 17 and generally parallel thereto, as seen in Figure 1. The free end 59 of the strip extends beyond the curved edges 23 and 25 of the channel sides and as seen in Figures 2 and 3 the outer portion of the strip is curved near the free end 59 thereof to extend away from tape 48 of the cassette 13 when the device is engaged on the cassette. The strip 51 thus provides a cavity for reception of an erase head of a tape recorder.

The fragment of cassette 13 shown in Figure 3 has a single opening 46 in front wall 61 of the cassette housing. In fact the front panel of a standard cassette has a total of five openings arranged symmetrically along the length of a central portion of the panel. When the cassette is positioned in a tape recorder and the record button is pressed, the record head advances into the central opening and the erase head into the end - most opening 46 for recording on one side of tape 48 or into the other similar opening at the opposite side on front wall 61, for recording on
the opposite side of the tape.   Above and below each of the
two openings for entry of the erase head, is a pair of aligned
apertures.   Two of these apertures, 30 and 32, are shown in
Figure 3 in the top and bottom walls 34 and 36 respectively of the
cassette housing.

A second embodiment of the device is illustrated in
Figures 4 and 5.   The device of these Figures, like that of
Figures 1 to 3, is for attachment to a cassette, and it is in the
form of a clip.   Whilst the device of Figures 1 to 3 is adapted
for engagement with outwardly facing surfaces of a cassette, the
device shown in Figures 4 and 5 is for fitting to inwardly facing
surfaces, as is described in more detail below.

Figures 4 and 5 show a device 111, having a pair of opposed
parallel sides 115, 117 which are integral with flexible shielding
member or strip 151.   The sides 115, 117 are joined to the ends of
respective side edges 141, 143 of the strip 151, and they extend
in a direction perpendicular to the length of the strip.   Each of
the sides 115, 117 has a curved end 123, 125 remote from the strip
and towards these ends are dimples 127, 129 similar to those of the
first embodiment, the sides with dimples serving for attachment of
the device to a cassette.   These dimples like dimples 27 and 29 have
chamfered edges 131, 133, but instead of being inwardly extending they
project outwardly from the sides.

Again unlike the device 11 of the earlier Figures, device 111 has no cross member and the upstanding sides 115 and 117 are connected directly with the strip 151 at one end thereof. At this end, the strip is planar whilst the other end 159 is curved in the direction of the sides. When the device is fitted to a cassette, such as cassette 13 in Figure 3, the free end 159 of the strip 151 extends away from the tape and a cavity is provided for entry of the erase head.

Both of the devices 11 and 111 are formed integrally as a pressing, although they could be made from separate parts connected together. The material of both of the illustrated devices is phosphor-bronze with a nickel finish and the thickness is such that strip 51 or 151 has a certain amount of springiness. There is also some degree of flexibility in the sides of each device and the cross member of device 11 to permit engagement with and removal from cassette housings of different manufacturers. The phosphor-bronze strip 51 or 151 is totally impermeable to magnetic field and there is total attenuation of the erase field in use of these devices.

In use of the device 11 of Figures 1 to 3 to make a superimposed recording on a pre-recorded magnetic tape, the channel is aligned as shown in Figure 3 with the opening 46 in the cassette through which the erase head is to extend during recording. The channel sides 15, 17 are then engaged with the outwardly facing surfaces of top wall 34 and bottom wall 36 of the cassette housing until the inwardly projecting dimples 27 and 29 snap inwards into the apertures 30 and 32 and the cross member 45 meets the front wall of the housing to the right of the opening 46 as seen in Figure 3, so that the strip 51 extends into the opening in engagement with the magnetic tape 48. The dimples 27, 29 are sized so that the outer diameter of the chamfered edges is fractionally less than the diameter of the apertures so that there is firm retention of the device by engagement of the dimples in the apertures in the top and bottom walls of the cassette housing.

The width of the strip 51 is approximately the same as, but not less than, the width of the tape 48 so that the tape is effectively shielded. When the cassette bearing the device is introduced to a tape recorder the flexible strip lies between the tape and the erase head. On actuation of the machine to make a recording on the tape, the record and erase heads are advanced towards the magnetic tape, but because of the presence of strip 51 the erase head advances into the cavity formed by the strip, and contacts the strip instead of the tape. The thickness of the phosphor-bronze, in this case around 0.26 mm, is selected so that the strip is sufficiently thin to have the flexibility to conform to the contour of the erase head. The material is impermeable to the field of the head so that the erasing field is completely attenuated before reaching the tape, and there is no erasure of the original recording as tape passes the erase head whilst a new recording is superimposed. The smooth surface of the strip ensures a minimum of wear to the tape as it is driven past the erase head behind the interposed strip. On a subsequent playing of the tape the original recording will be audible undiminished and the new recording will be heard simultaneously.

The device 111 of Figures 4 and 5 fits into one of the openings such as opening 46 of cassette 13, instead of being engaged with the outer surfaces of the cassette as is the case for device 11. Device 111 has the advantage that it can be used for making a recording on the kind of tape deck where there is close contact between the bottom wall of the cassette and the base of the deck. To insert the device 111 into cassette 13, it is aligned with opening 46 so that the planar part of strip 151 lies parallel with the tape 148, and the sides 115 and 117 and the free end 159 of the strip all face away from the tape. The sides are then advanced into the opening until the outwardly projecting dimples 127 and 129 snap into apertures 30, 32, thereby retaining the device within the opening. Strip 151 is somewhat wider than the tape, and defines a cavity within the opening. As for the externally fitting device 11, on actuation of the record and erase heads there is advancement of the erase head into the cavity to contact the strip which because of its flexibility adopts the contour of the head. Erasure from the tape passing behind the strip is prevented, thus permitting the making of a superimposed recording over the existing recording.

Superimposed recordings can be made to add commentaries to background music or bird song, for example, to add further voices to existing dialogue or monologue, to superimpose the performance of a soloist on a pre-recorded accompaniment, to link up separate recordings or to obtain special effects on audio or video tapes. There could be not only one but several superimposed recordings by making further over-recordings on previously superimposed recordings. The simplicity of using the invention and cheapness of the device mean that the technique of providing superimposed recordings can be made available to the amateur as well as the professional.

Furthermore, by choosing a material for the shielding member which is partially impermeable to magnetic field, a partial attentuation of the pre-recording can be achieved. The degree of attenuation will depend on the thickness of the strip between the erase head and the tape. If it is not desired to make a superimposed recording, the device can be used to reduce the recording level of the pre-recording to an extent depending on the degree of attenuation. Alternatively, a second recording could be superimposed over the reduced volume original, and fade-in and fade-out effects achieved.

The configuration of the device can be varied as desired. For instance, the cross member 45 of the externally fitting device 11 could be replaced by a rectangular member extending the full length of the sides with a central aperture, and strip 51 could extend across the aperture, attached thereto at one or both ends. Means for engaging the device with the cassette other than the inwardly or outwardly projecting circular dimples 27, 29 to fit into the apertures on the cassette could be provided: for example, there could be means for engaging the cassette frictionally. The internally fitting device 111 could have a 'T' shaped member instead of strip 151, with the bar of·the 'T' between the two sides 115, 117 and the stem forming the shielding strip. The dimensions of the device will vary according to the type of cassette, audio or visual, miniature or standard, to which it is to be attached, and the material of the strip will be chosen depending on whether total or partial attenuation of the erase field is desired.

CLAIMS

1. A method of making a superimposed recording on a pre-recorded magnetic tape (48), comprising locating the tape in a tape recorder for transport thereof past the magnetic heads of the tape recorder, positioning a shielding member (51), effective to attenuate the erasing field of the erase head, between the tape and the erase head, and actuating the tape recorder to energise the erase and record heads for the recording of additional intelligence on the tape.

2. A method as claimed in claim 1, in which the magnetic tape is housed in a cassette (13) and the shielding member is attached to the cassette prior to the insertion thereof into the tape recorder.

3. A method as claimed in claim 2, whereby on actuation of the tape recorder the erase head is advanced to contact an area of the shielding member.

4. A method as claimed in claim 3, whereby the contact of an area of the shielding member by the erase head effects conforming of the shielding member to the contour of the head.

5. A device for use with a cassette (13) housing magnetic tape (48) and for attenuating the erase field of the erase head of a tape recorder in which the cassette is inserted, characterised in that the device comprises attachment for securing the device to the cassette and a shielding member (51) which, when the device is so secured and the cassette is inserted in a tape recorder, is located between the tape and the erase head.

6. A device as claimed in claim 5, wherein the shielding member comprises a flexible strip adapted so that in use the strip conforms with the contour of the erase head over an area of contact.

7. A device as claimed in claim 5 or claim 6, wherein the shielding member is totally impermeable to the erase field of the tape recorder.

8. A device as claimed in claim 5 or claim 6, wherein the shielding member is partially impermeable to the erase field of the tape recorder.

9. A device as claimed in any one of claims 5 to 7, wherein the shielding member comprises phosphor-bronze.

10. A device as claimed in any one of claims 5 to 9, wherein the shielding member is integral with the attachment means.

11. A device as claimed in any one of claims 5 to 10, wherein the attachment means comprises a pair of opposed sides (15, 17) for engagement of the device with respective opposite walls (34, 36) of a tape cassette.

12. A device as claimed in claim 11, wherein the attachment means include dimples (27, 29) on the opposed sides for engagement in apertures (30, 32) in the walls of the cassette.

13. A device as claimed in claimed in claim 12, wherein the opposed sides define a channel along which the shielding member extends, and the dimples protrude inwardly from the sides of the channel for engagement thereof with outwardly facing walls of a cassette.

14. A device as claimed in claim 13 wherein a cross member (45) connects corresponding edges (41, 43) of the sides of the channel and the shielding member includes a first part (55) which is joined to the cross member at one end thereof and extends within the channel normal to the cross member, and a second part (57) which extends laterally from the end of the first part remote from the cross member and parallel with the sides of the channel, the shielding member thus providing a cavity for entry by the erase head of a tape recorder into which a cassette bearing the device is inserted.

15.    A device as claimed in claim 12, wherein the opposed sides
(115, 117) extend perpendicular to the length of the shielding
member and the dimples (127, 129) protrude outwardly from the
sides for engagement thereof with inwardly facing walls of a
cassette.

FIG.1

FIG. 4

FIG. 2

FIG. 5

0045186

1/2

FIG. 3

## DOCUMENTS CONSIDERED TO BE RELEVANT

| Category | Citation of document with indication, where appropriate, of relevant passages | Relevant to claim |
|---|---|---|
| | <u>US - A - 4 121 263</u> (PRICE)<br>  * Column 7, lines 12-50; figure<br>    12, lines 38-49; figures 4,5,<br>    6A, 6B and 10 *<br><br>    -- | 1-4 |
| | <u>US - A - 3 636 274</u> (BRATKA)<br>  * Column 1, lines 13-39; column<br>    2, lines 25-42, 71-72; column 3,<br>    lines 20-24; figures 1,2,3,4,<br>    5,6 *<br><br>    -- | 5,6,10 |
| | <u>US - A - 2 861 133</u> (HERR)<br>  * Column 3, lines 16-18; column 4,<br>    lines 33-51;figures 4,5 *<br><br>    -- | 1,4-6 |
| | <u>GB - A - 1 023 885</u> (YOUNG)<br>  * Page 1, lines 11-25, 34-38,<br>    80-83; figures 1,2 *<br><br>    -- | 1,5 |
| | FUNKSCHAU, vol. 34, no. 15, 01-08-1962, München, DE<br>München DE<br>B. STANGE: "Taschen-tonbandgerät"<br>pages 391-392<br>  * Page 391, right-hand column<br>    first paragraph; figure 8b *<br><br>    -- | 1,5 |
| | <u>US - A - 3 478 177</u> (MORITA)<br>  * Column 3, lines 13-29; figure<br>    4 *<br><br>    --          ./. | 1,5 |

**CLASSIFICATION OF THE APPLICATION (Int. Cl.³)**

G 11 B 27/02
        15/62
        15/12

**TECHNICAL FIELDS SEARCHED (Int. Cl.³)**

G 11 B 27
G 11 B 5
G 11 B 15

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 22-10-1981 | FUX |

EPO Form 1503 1  06.78

| | DOCUMENTS CONSIDERED TO BE RELEVANT | | CLASSIFICATION OF THE APPLICATION (Int. Cl.3) |
|---|---|---|---|
| Category | Citation of document with indication, where appropriate, of relevant passages | Relevant to claim | |
| | US - A - 2 876 295 (IRBY) <br> * Column 4, line 64 - column 5, line 6, column 7, lines 5-36; figures 17,18,19 * <br><br>-- | 1,5,7 8 | |
| | US - A - 3 612 774 (WIKLUND) <br> * Column 4, lines 39-68; figures 1,2,3 * <br><br>-- | 5,11- 13 | |
| A | DE - B - 1 127 100 (AGFA) <br> * Column 4, line 47 - column 5, line 10; figures 2,3 * <br><br>-- | 1 | TECHNICAL FIELDS SEARCHED (Int. Cl 3) |
| A | GB - A - 2 009 481 (FISHER) | 1-3,5 | |
| A | US - A - 2 713 619 (EDDY) | 1 | |
| A | DE - A - 2 303 248 (SCHWITZ et al.) | 1,5 | |
| A | DE - A - 2 414 538 (NOWAK et al.) | 1,5 | |
| A | GB - A - 1 351 649 (SONY) | 1,5 | |
| A | US - A - 3 838 463 (YSBRAND) | 1 | |
| | ---- | | |